# EUROPEAN PATENT APPLICATION

(11) **EP 4 629 750 A1**
(43) Date of publication of application: **08.10.2025**
(21) Application number: 23902191.8
(22) Date of filing: 06.09.2023
(51) Int. Cl.: H05B 6/68, A23L 3/365, A23B 4/07, H05B 6/66

(54) **CONTROL METHOD, APPARATUS AND DEVICE FOR RADIO FREQUENCY THAWING DEVICE, AND STORAGE MEDIUM**

(30) Priority: 15.12.2022 CN 202211616443
(71) Applicant: Hefei Hualing Co., Ltd., Hefei, Anhui 230601 (CN); Hefei Midea Refrigerator Co., Ltd., Hefei, Anhui 230088 (CN); Midea Group Co., Ltd., Foshan, Guangdong 528311 (CN)
(72) Inventor: CAI, Yunlong, Hefei, Anhui 230601 (CN); RUAN, Zhaozhong, Hefei, Anhui 230601 (CN); YAN, Xinsheng, Hefei, Anhui 230601 (CN); MA, Yingjie, Hefei, Anhui 230601 (CN); YANG, Yingxin, Hefei, Anhui 230601 (CN); XU, Meng, Hefei, Anhui 230601 (CN); XU, Zhongrui, Hefei, Anhui 230601 (CN); WENG, Jianwei, Hefei, Anhui 230601 (CN); ZHANG, Baoyu, Hefei, Anhui 230601 (CN); LIANG, Minyou, Hefei, Anhui 230601 (CN); ZHANG, Qiusheng, Hefei, Anhui 230601 (CN)
(74) Representative: RGTH
(86) International application number: PCT/CN2023/117178
(87) International publication number: WO 2024/124985

(57) **Abstract**

A control method, apparatus, device for a radio frequency thawing device, and a storage medium. The radio frequency thawing device includes: an RF power amplification loop (102) configured for outputting an RF power to a tuning loop (103), and the tuning loop (103) configured for an impedance matching. The method includes: identifying a food material in the radio frequency thawing device to obtain a food material information (201); determining a target RF power and an initial thawing time of the radio frequency thawing device according to the food material information (202); adjusting the initial thawing time according to a mismatch frequency or reflection coefficient of the tuning loop to obtain a target thawing time, the mismatch frequency being used to characterize a frequency degree at which the tuning loop is triggered for impedance matching, the reflection coefficient being used to characterize a power consumption degree of the RF power amplification loop (203); thawing the food material according to the target RF power and the target thawing (204).

## Description

### CROSS-REFERENCE TO RELATED APPLICATION

This application claims priority to Chinese patent application No. 202211616443.4, filed on December 15, 2022, the entire contents of which are incorporated herein by reference.

### TECHNICAL FIELD

The invention belongs to the technical field of control of radio frequency thawing, and in particular, relates to a control method, device and apparatus for a radio frequency thawing device and a storage medium.

### BACKGROUND

A radio frequency thawing device, compared with a traditional natural thawing or microwave thawing device, has advantages of fast thawing speed, uniform thawing effect, convenient and hygienic use, and the like.

The thawing effect of radio frequency thawing device depends to a great extent on the knowledge of a control system thereof about a food material, such as a type, mass, initial temperature and other information of the food material. Therefore, usually a user needs to manually input specific information of food material and a thawing time, and then the control system thaws the food material according to the specific information of food material and the thawing time. This solution requires manual participation and has a low level of intelligence.

### SUMMARY

A control method, apparatus, device for a radio frequency thawing device and a storage medium are provided according to an embodiment of the invention, which can avoid a manual participation and improve an intelligence level of thawing.

Other features and advantages of the invention will become apparent from the following detailed description, or may be learned partially by a practice of the invention.

According to a first aspect of the invention, a control method for a radio frequency thawing device is provided. The radio frequency thawing device comprises an RF power amplification loop and a tuning loop, the RF power amplification loop being configured to output an RF power to the tuning loop, the tuning loop is configured for an impedance matching. The method comprises:
identifying a food material in the radio frequency thawing device to obtain a food material information; determining a target RF power and an initial thawing time of the radio frequency thawing device according to the food material information; adjusting the initial thawing time according to a mismatch frequency or reflection coefficient of the tuning loop to obtain a target thawing time, the mismatch frequency being used to characterize a frequency degree at which the tuning loop is triggered for the impedance matching, the reflection coefficient being used to characterize a power consumption degree of the RF power amplification loop; thawing the food material according to the target RF power and the target thawing time.

According to a second aspect of the invention, a control apparatus for a radio frequency thawing device is provided. The radio frequency thawing device comprises an RF power amplification loop and a tuning loop, the RF power amplification loop being configured to output an RF power to the tuning loop, the tuning loop is configured for an impedance matching. The apparatus comprises:
a food material identification unit, configured for identifying a food material in the radio frequency thawing device to obtain food material information; a matching control unit, configured for determining a target RF power and an initial thawing time of the radio frequency thawing device according to the food material information; a time adjustment unit, configured for adjusting the initial thawing time according to a mismatch frequency or reflection coefficient of a tuning loop to obtain a target thawing time, the mismatch frequency being used to characterize a frequency degree of the tuning loop that is triggered for an impedance matching, the reflection coefficient being used to characterize a power consumption degree of an RF power amplification loop; and a thawing control unit, configured for thawing the food material according to a target RF power and a target thawing time.

According to a third aspect of the invention, a control device for a radio frequency thawing device is provided, comprising a memory stored with a computer program and a processor, which, when executing the computer program, implements steps of the above method.

According to a fourth aspect of the invention, a computer-readable storage medium is provided, on which a computer program is stored. The computer program, when executed by a processor, causes the processor to implement steps of the above method.

According to a fifth aspect of the invention, a computer program product is provided, which comprises a computer program. The computer program, when executed by a processor, causes the processor to implement steps of the above method.

It is to be understood that the foregoing general description and the following detailed description are exemplary and explanatory only and are not restrictive of the invention.

### BRIEF DESCRIPTION OF DRAWINGS

The accompanying drawings, which are incorporated in and constitute a portion of this specification, illustrate examples consistent with the invention and, together with the description, serve to explain the principles of the invention. Obviously, the accompanying drawings described below are some examples of the invention. For those of skill in the art, other accompanying drawings may be acquired according to those accompanying drawings without creative effort. In the accompanying drawings:
FIG. 1 shows a schematic structural diagram of a radio frequency thawing device according to some embodiments of the invention;
FIG. 2 shows a flow chart of a control method for a radio frequency thawing device according to some embodiments of the invention;
FIG. 3 shows a detailed flow chart of step 201 in FIG. 2;
FIG. 4 shows a schematic diagram of temperature changes of different parts of food material during a thawing process;
FIG. 5 shows a circuit diagram of a tuning loop in FIG. 1;
FIG. 6 shows a schematic diagram illustrating a change trend of an access status of an energy storage element group in FIG. 5;
FIG. 7 shows a flow chart of impedance matching of the tuning loop in FIG. 1;
FIG. 8 shows a detailed flow chart of step 203 in FIG. 2;
FIG. 9 shows a variation curve diagram of a mismatch frequency in FIG. 8;
FIG. 10 shows another detailed flow chart of step 203 in FIG. 2;
FIG. 11 shows a schematic diagram of a change trend of a reflection coefficient in FIG. 10;
FIG. 12 shows a block diagram of a control apparatus for a radio frequency thawing device according to some embodiments of the invention; and
FIG. 13 shows an internal structural diagram of the control device for the radio frequency thawing device according to some embodiments of the invention.

### DETAILED DESCRIPTION

The technical solutions in the embodiments of the invention will be clearly and completely described below with reference to the accompanying drawings in the embodiments of the invention. Obviously, the described embodiments are only some embodiments, rather than all embodiments of the invention. Based on the embodiments in the invention, all other embodiments obtained by those skilled in the art without creative efforts fall within the protection scope sought by the invention.

Furthermore, the described features, structures, or characteristics may be combined in any suitable manner in one or more embodiments. In the following description, a plurality of specific details are provided to give a thorough understanding of embodiments of the invention. However, those skilled in the art will appreciate that the technical solutions of the invention may be practiced without one or more of the specific details, or by adopting other methods, components, apparatuses, steps and the like. In other instances, well-known methods, apparatuses, implementations, or operations are not shown or described in detail to avoid obscuring aspects of the invention.

The blocks shown in the accompanying drawings are merely functional entities and do not necessarily correspond to physically separate entities. That is, these functional entities may be implemented in software form, or implemented in one or more hardware modules or integrated circuits, or implemented in different networks and/or processor apparatuses and/or microcontroller apparatuses.

The flowcharts shown in the accompanying drawings are merely exemplary illustrations and do not necessarily comprise all contents and operations/steps, nor do they necessarily have to be executed in the order described. For example, some operations/steps may be decomposed, while some operations/steps may be combined or partially combined, and thus the actual execution order may change according to actual circumstances.

It should be noted that the terms "first", "second" and the like in the specification and claims of the invention and the above accompanying drawings are used to distinguish similar objects, and are not necessarily used to describe a specific order or sequence. It is to be understood that the terms so used are interchangeable under appropriate circumstances such that the embodiments of the invention described herein are capable of being practiced in sequences other than those illustrated or described.

It should be noted that a radio frequency thawing device proposed in the invention may comprise a radio frequency (RF) power amplification loop and a tuning loop. The RF power amplification loop is configured to output an RF power to the tuning loop. The tuning loop is configured for an impedance matching.

It should also be noted that the radio frequency thawing device proposed in the invention refers to a device with a radio frequency thawing function, such as a refrigerator with a radio frequency thawing function. It can be understood that, accordingly, a control method for the radio frequency thawing device proposed in the invention can be applied to all devices with the radio frequency thawing function, comprising but not limited to refrigerators.

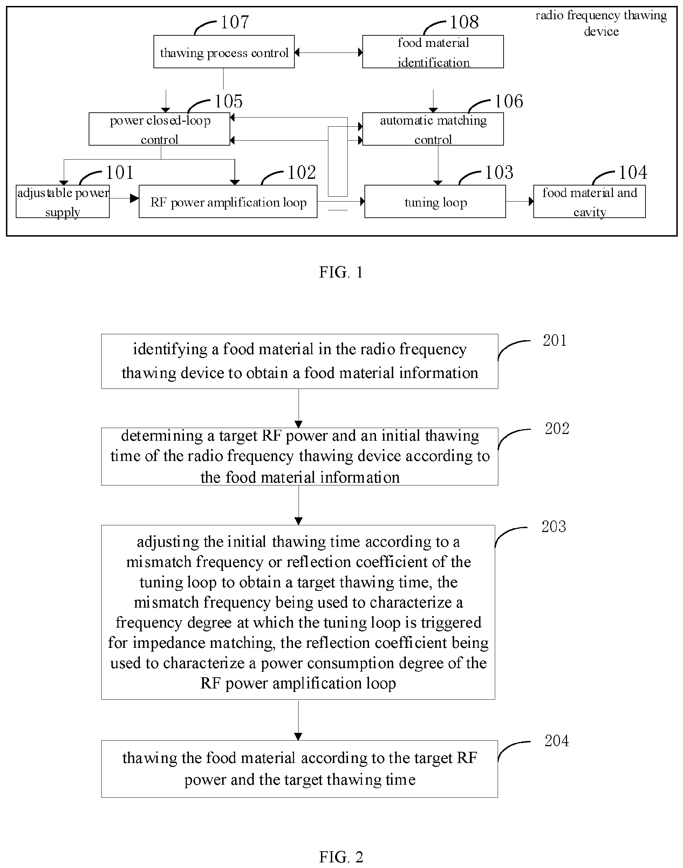

In order to enable those skilled in the art to better understand the radio frequency thawing device disclosed herein, it will be described below in conjunction with FIG. 1. FIG. 1 shows a schematic structural diagram of a radio frequency thawing device according to some embodiments of the invention. As shown in FIG. 1, a possible radio frequency thawing device is shown. The radio frequency thawing device comprises a hardware system and a control system. The hardware system may comprise an adjustable power supply 101, which is configured to provide a power for the entire radio frequency thawing device and realize an output voltage adjustment function; an RF power amplification loop 102, which is used to output an RF power to a tuning loop and provide an RF thawing energy in a food material thawing process; a tuning loop 103, which is configured to compensate for a load impedance mismatch caused by a state change of a food material; and a food material and cavity 104, which is used to accommodate the food material to be thawed.

The control system of the radio frequency thawing device as shown in FIG. 1 may comprise: a power closed-loop control 105, which is configured to sample a forward power signal and a reverse power signal, and output a control signal to an adjustable power supply 101 and the RF power amplification loop 102 to achieve an accurate output power closed-loop control function; an automatic matching control 106, which is configured to automatically collect the forward power signal and the reverse power signal to automatically send an impedance matching instruction to the tuning loop 103 when an impedance mismatch occurs; a thawing process control 107, which is configured to control an output power curve and an output time according to needs of food material identification and a thawing process; and a food material identification 108, which is configured to judge and identify a type of food material, and determine a food material information (such as a type, mass, temperature, and the like).

FIG. 2 shows a flow chart of a control method for a radio frequency thawing device according to some embodiments of the invention.

As shown in FIG. 2, a control method for a radio frequency thawing device is provided. The method is described by taking an application of the method to the radio frequency thawing device in FIG. 1 as an example. The method may comprise step 201 to step 204.

In step 201, a food material in the radio frequency thawing device is identified to obtain food material information.

It should be understood that different food materials have different attribute statuses. For example, different food materials to be thawed have different types of food material, a pressure of food material placed in a food material accommodating cavity, a mass of food material, a temperature of food material at an initial thawing stage, a volume of food material, a shape of food material, an image of food material, a water content of food material, and the like. In the embodiments of the invention, a specific attribute status of food material can be determined as the food material information according to different application scenarios, and the invention does not limit this.

A control device for the radio frequency thawing device can identify a food material in a variety of ways. Optionally, a weight sensor, a temperature sensor or a visual sensor may be disposed in the control device. A food material may be identified based on signals uploaded by the weight sensor, the temperature sensor or the visual sensor. In other embodiments, a food material may be thawed at a fixed RF power and in a fixed thawing time to obtain a response data of an impedance matching performed by the tuning loop within a preset thawing time, and then the food material information may be determined based on the response data.

In step 202, a target RF power and an initial thawing time of the radio frequency thawing device are determined according to the food material information.

It should be understood that a principle of radio frequency thawing is that, under an action of radio frequency alternating electric field, polar molecules in a food material continuously are rotated and collided, so that an internal energy of food material is increased. Differences among food materials are mainly reflected in different dielectric constants. A dielectric property of a food material determines an interaction between the food material and an electromagnetic energy. The dielectric property of the food material is described by the dielectric constant and a dielectric loss. The dielectric constant reflects an ability of food material to store energy in an electromagnetic field, while the dielectric loss reflects an ability to convert the electromagnetic energy into a heat energy of food material. A food material with higher dielectric loss is more likely to absorb an electric field energy than a food material with lower dielectric loss. Factors that affect the dielectric constant of food material usually comprise: a water content of food material, a temperature of food material and a mass of food material.

A water in a food material can exist in a form of free water or bound water. A contribution of free water to the dielectric constant is much greater than that of bound water. A food material with high water content, compared with a food material with low water content, has larger dielectric constant and dielectric loss. Therefore, when the food material with high water content is placed in a thawing chamber, an optimal matching point for a load impedance of the food material with high water content will be significantly different from that of the food material with low water content, and the food material with high water content, when thawed to a same temperature point, will need to absorb more energy.

An effect of food material temperature on the dielectric property depends on an RF frequency, a ratio of free water to bound water, an ionic conductivity and a composition of materials. Under the RF frequency, both the dielectric constant and dielectric loss of food material increase with a rise in temperature due to a polarization of bound water. The dielectric constant and dielectric loss of free water decrease with the rise in temperature. Therefore, a change regularity with temperature of the dielectric property of a food material is related to a ratio of free water to bound water. In different temperature ranges, the dielectric property of the food material shows different change trends. In general, when the food material is thawed, the dielectric constant and dielectric loss will increase significantly, especially at -5°C-0°C.

The greater a mass of a food material is, the more polarized water molecules are. The polarized water molecules are melted from ice in the food material and can move freely. Therefore, under a same food material type and temperature condition, a food material with larger mass, when thawed to a same temperature point in comparison with a food material with smaller mass, can absorb more energy and have a more slowly risen speed of temperature.

That is to say, for food materials of a same temperature and mass, the lower a water content is, the less the energy required for thawing is; for food materials of a same temperature and water content, the smaller a mass is, the less the energy required for thawing is; for food materials of a same water content and mass, the lower a temperature is, the more energy is required for thawing because freely moving polar water molecules are fewer. Therefore, for different food material information, corresponding target RF powers and initial thawing times of the radio frequency thawing device are different.

Optionally, a predetermined calibration data can be obtained, the calibration data being used to characterize a correspondence between an RF power and a food material information and a correspondence between a thawing time and the food material information; then based on the calibration data, according to the food material information, the target RF power and initial thawing time are matched for the food material in the radio frequency thawing device.

Optionally, the target RF power may be an RF power with a fixed value, or an RF power that varies according to a certain curve. Of course, the target RF power may also be set in other ways, and the invention does not limit this. It is understandable that if an RF power that is changed according to a certain curve is used as the target RF power, the food material can absorb different RF powers at different thawing stages. In this way, not only a waste of RF energy can be avoided, but also a precision of a thawing plan matched by the radio frequency thawing device for food material thawing can be improved.

In an embodiment of the invention, by matching appropriate target RF powers and initial thawing times to different food materials (difference in types of food material, masses of food material, temperatures of food material, and the like), a precision of the radio frequency thawing device in thawing food materials can be improved, thereby enhancing the user experience.

In step 203, the initial thawing time is adjusted according to a mismatch frequency or reflection coefficient of the tuning loop to obtain a target thawing time. The mismatch frequency is used to characterize a frequency degree at which the tuning loop is triggered for impedance matching. The reflection coefficient is used to characterize a power consumption degree of the RF power amplification loop.

The mismatch frequency can be interpreted as the number of times that the impedance mismatch occurs in the tuning loop (i.e., the number of times which the impedance matching is performed) within a fixed time. The fixed time may be 3 minutes, or longer or shorter.

Optionally, the control device for the radio frequency thawing device can adjust the initial thawing time according to the mismatch frequency to obtain the target thawing time, or can also adjust the initial thawing time according to the reflection coefficient to obtain the target thawing time.

It should be understood that a state of food material is constantly changing during the thawing process. An impedance of a load composed of the food material and the thawing chamber also changes in real time. When the RF power cannot be output effectively due to the significantly changed impedance of the load, a tuning and matching are required to be performed again to adapt to a new state of food material and improve a utilization rate of RF energy. Therefore, during the thawing process of food material, the mismatch frequency and reflection coefficient of the tuning loop are constantly changing with the state of food material. By correcting the initial thawing time with the mismatch frequency or reflection coefficient of the tuning loop during the thawing process to re-determine the thawing time of food material, a precision of thawing of food material by the radio frequency thawing device can be effectively improved.

In step 204, the food material is thawed according to the target RF power and the target thawing time.

It should be understood that, the food materials are identified at an early stage of the thawing process of food material, respective target RF power and initial thawing time are matched to different food materials, and the initial thawing time is corrected according to the mismatch frequency or reflection coefficient of the tuning loop during the thawing process, and thus the technical solution proposed in the invention, compared with a solution for different food materials in which a fixed RF power is applied, and a same thawing time or a thawing time set by the user are used, can more accurately provide thawing solutions matched with different food materials, that is, the radio frequency thawing device can strictly control the thawing time and the RF power required for the thawing process of food material, and thus the food materials can be thawed precisely.

In an embodiment of the invention, a food material in the radio frequency thawing device is identified to obtain a food material information; a target RF power and an initial thawing time of the radio frequency thawing device are determined according to the food material information; the initial thawing time is adjusted according to a mismatch frequency or reflection coefficient of the tuning loop to obtain a target thawing time, the mismatch frequency being used to characterize a frequency degree at which the tuning loop is triggered for impedance matching, the reflection coefficient being used to characterize a power consumption degree of the RF power amplification loop; the food material is thawed according to the target RF power and the target thawing time. With the technical solution disclosed in the invention, the food material can be actively identified and the thawing time can be continuously adjusted during the thawing process, and thus a manual input of the food material information and thawing time can be avoided, and an intelligent thawing process can be effectively realized.

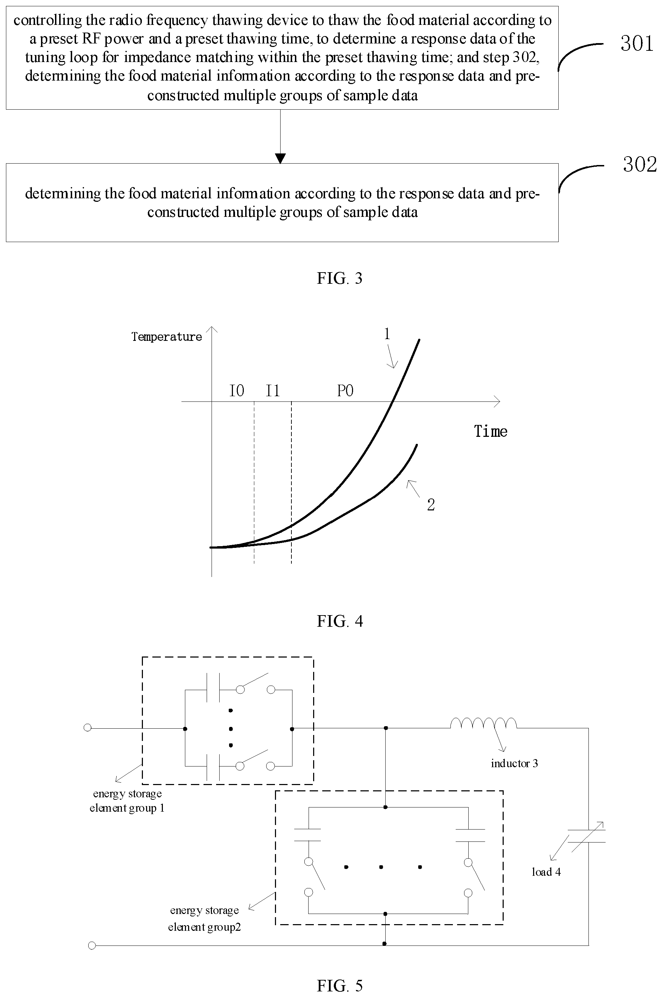

FIG. 3 shows a detailed flow chart of step 201 in FIG. 2. As shown in FIG. 3, determining a target RF power and an initial thawing time of the radio frequency thawing device according to the food material information, may comprise:
step 301, controlling the radio frequency thawing device to thaw the food material according to a preset RF power and a preset thawing time, to determine a response data of the tuning loop for impedance matching within the preset thawing time; and step 302, determining the food material information according to the response data and pre-constructed multiple groups of sample data.

The preset RF power and the preset thawing time are a certain RF power applied to the food material to be thawed for a certain time at the initial thawing stage to determine the food material information.

Optionally, the preset RF power may be greater than the target RF power. Because the dielectric constant and dielectric loss of a food material, at a certain frequency, increase with a raising of temperature, the food material is caused to absorb more electromagnetic energy with the raising of temperature. A food material at higher temperatures tends to absorb more energy, and thus a "thermal runaway" effect in a later stage of thawing is generated. As for the food material in a radio frequency electric field, because an electromagnetic wave is perpendicular to a surface of food material, and in turn penetrates into an interior of food material and continuously attenuates in the process of penetration, and electric field strengths at edges and corners of food material are significantly higher than other parts, and thus the edges and corners of food material are more easily heated. As the thawing process proceeds, temperatures of overheated portions are increased more than other portions. During the thawing process, a crystal ice on a top of the food material after melted into water, gathers at a bottom of the food material, and thus the water content at the bottom is higher than that at the top. Under an action of an electric field, a difference between dielectric properties of the top and bottom of food material becomes increasingly larger, that is, the bottom will absorb more heat, while the top will absorb less heat, and thus a temperature difference between the top and bottom is gradually widened.

FIG. 4 shows a schematic diagram of temperature changes of different parts of food material during a thawing process. As shown in FIG. 4, a curve 1 is a temperature change curve of an edge and corner or a bottom of a food material that is more likely to absorb heat. A curve 2 is a temperature change curve of a part with relatively larger specific heat capacity (such as the middle part of food material). I0 is a first stage of food material identification. I1 is a second stage of food material identification. P0 is a thawing stage.

In order to prevent a "thermal runaway" phenomenon, in identification stages I0 and I1 of the thawing process, since temperatures of various parts of food material are relatively low, most of water still exists in a form of ice which has a small specific heat capacity, and a temperature difference of the curve 1 with the curve 2 is not large, the RF power (i.e., the preset RF power) in these two stages can be set relatively high. When the identification stages are over, the food material is already in a semi-thawed state. At this time, if it is still thawed at a higher power, temperature differences among different parts of food material will become larger and larger, and thus the thermal runaway will be intensified. Therefore, in the thawing stage P0, a smaller thawing power (i.e., the target RF power) needs to be set, and thus a temperature in a high-temperature area can be transferred to a low-temperature area to avoid the thermal runaway.

The response data refers to some status data generated when the tuning loop in the radio frequency thawing device performs the impedance matching within a certain preset thawing time. Optionally, the response data may be the number of times of the impedance matching (i.e., the number of mismatches in the tuning loop) within a preset thawing time; the response data may be an access status of an energy storage element of the tuning loop after the preset thawing time starts; the response data may be a change trend of a power value output by the RF power amplification loop when the tuning loop performs the impedance matching within the preset thawing time; the response data may also be a change trend of the reflection coefficient within the preset thawing time. The invention does not limit which status data incurred when the tuning loop performs the impedance matching is taken as the response data.

In order to enable those skilled in the art to better understand the response data of this embodiment, an explanation will be given below in conjunction with FIG. 5. FIG. 5 shows a circuit diagram of a tuning loop in FIG. 1. As shown in FIG. 5, a circuit diagram of a possible tuning matching loop is shown, which comprises energy storage element groups (for example, an energy storage element group 1 connected in series with a load 4, and an energy storage element group 2 connected in parallel with the load 4 ) for the impedance matching, an inductor 3, and a load 4. Optionally, the number of the energy storage element group 1 and the number of the energy storage element group 2 may be one or more. Each energy storage element group may comprise an energy storage element and an actionable element. The corresponding energy storage element is switched in by turning on and off the actionable element, to implement the impedance matching.

Optionally, when an impedance of the load 4 changes (i.e., when the state of the food material changes during the thawing process), the impedance mismatch in the tuning loop will be caused. In this case, the impedance matching can be performed by adjusting the on and off states of various actionable elements as shown in FIG. 5, that is, adjusting the access statuses of different energy storage elements in the energy storage element group 1 and/or the energy storage element group 2 to compensate for the impedance mismatch, and thus the RF power output by the RF amplification loop can be maximally utilized.

It is understandable that the tuning loop shown in FIG. 5 will generate many different response data during the impedance matching, such as the access status and the number of times that the impedance matching occurs of the energy storage element group, and the like.

The pre-constructed multiple groups of sample data refer to an experimental data made by relevant personnel to more accurately implement a thawing function of the radio frequency thawing device, and comprise a sample response data and a sample characteristic parameter in one to one correspondence with the sample response data. The sample characteristic parameter is used to characterize the attribute status of the food material.

It can be understood that the sample response data refers to a response data of an impedance matching performed by a tuning loop which is obtained by experiments conducted on a large number of different food materials (comprising different food materials constructed by variety, temperature, mass, and the like) under a certain experimental RF power and a certain experimental time. The sample characteristic parameters in one to one correspondence with the sample response data may be sample characteristic parameters such as types of food material, temperatures of food material, masses of food material, and the like.

Optionally, meat, 500 g mass, and -10 °C may be used as the sample characteristic parameters, and sample response data corresponding to these sample characteristic parameters may be that the number of mismatches of the tuning loop is 20.

Optionally, the determining a food material information according to the response data and pre-constructed multiple groups of sample data may be implemented through the following steps: determining response data of the tuning loop for impedance matching within a plurality of the preset thawing times to obtain multiple groups of response data; for each group of target response data, determining a matching degree of the target response data with various groups of sample response data, the matching degree being used to characterize a proximity degree of the target response data with the various groups of sample response data, the target response data being any group from the multiple groups of response data; calculating a comprehensive matching degree between the multiple groups of response data and a same sample response data, based on a matching degree of the multiple groups of response data with the same sample response data; and determining the sample characteristic parameter in correspondence with the sample response data with a highest comprehensive matching degree as the food material information.

It should be noted that multiple preset thawing times will correspond to multiple preset RF powers applied to the food material, but the preset RF power and preset thawing time at each time can be the same or different. The invention does not limit this.

The multiple groups of response data can be obtained from multiple thawing tests or from one thawing test. Optionally, the number of mismatches of the tuning loop may be used as response data. If two thawing tests are performed on the food material at the initial thawing stage of food material, two groups of data on the number of mismatches of the tuning loop will be generated.

The matching degree of the target response data and various groups of sample response data may be a ratio or a difference value of the target response data with the sample response data, or a method for determining the matching degree of the target response data with the various groups of sample response data may be set according to different application scenarios, and the invention does not limit this.

If there are multiple groups of response data, one matching degree will be obtained by matching each group of response data with each group of sample response data. In this way, the same sample response data will correspond to multiple matching degrees.

Optionally, the matching degrees of the multiple groups of response data in correspondence with a same sample response data may be weightedly calculated to obtain a comprehensive matching degree between the multiple groups of response data and the same sample response data. After the comprehensive matching degree is determined, a comprehensive matching degree threshold may also be set. The sample characteristic parameters corresponding to the sample response data whose comprehensive matching degree exceeds the comprehensive matching degree threshold are determined as the food material information.

In order to enable those skilled in the art to better understand a process of determining the food material information, an explanation will be given below in conjunction with Table 1 to Table 3.

**Table 1**

| Response Data | Sample 1 | Sample 2 | First set of tests | Second set of tests | Third set of tests |
|---|---|---|---|---|---|
| The Number of mismatches | 20 times | 25 times | 10 times | 15 times | 18 times |

**Table 2**

| | First set of tests | Second set of tests | Third set of tests |
|---|---|---|---|
| Matching degree with sample 1 | 50% | 75% | 90% |
| Matching degree with sample 2 | 40% | 60% | 72% |

**Table 3**

| | |
|---|---|
| Comprehensive matching degree with sample 1 | 74.5% |
| Comprehensive matching degree with sample 2 | 59.6% |

Optionally, as shown in Table 1, in Table 1 response data of the impedance matchings performed by the tuning loop within three preset thawing times are obtained (i.e., three groups of response data are obtained), and two groups of sample response data are comprised, where the response data is the number of mismatches of the tuning loop. It can be seen from Table 1 that the target response data corresponding to the first set of tests is 10 times; the target response data corresponding to the second set of tests is 15 times; the target response data corresponding to the third set of tests is 18 times; the sample response data of sample 1 (hereinafter referred to as sample 1 response data) is 20 times; and the response data of sample 2 (hereinafter referred to as sample 2 response data) is 25 times.

In Table 2, the matching degree of the response data with the sample response data is determined based on the ratio of the response data to the sample response data. In Table 3, the comprehensive matching degree is determined by weighted calculation, that is, weights of 0.2, 0.5 and 0.3 are assigned to three matching degrees, respectively, to obtain the comprehensive matching degree being 74.5% of the response data with the sample 1 response data. The comprehensive matching degree being 59.6% of the response data with the sample 2 response data is calculated in the same way. Because the comprehensive matching degree 74.5% of the response data with the sample 1 response data is greater than the comprehensive matching degree 59.6% of the response data with the sample 2 response data, the sample characteristic parameters corresponding to sample 1 can be determined as the food material information. Optionally, if the sample characteristic parameters corresponding to sample 1 are meat, 500 g mass and -10 °C, then the parameters of meat, 500 g mass and -10 °C are determined as the food material information.

In other embodiments, when the response data simultaneously comprises the access status of the energy storage element group in the tuning loop after the preset thawing time is activated, and the number of mismatches, a first score corresponding to the access status can be calculated by a difference value of the access status of the energy storage element group in the tuning loop with an access status in the sample response data, and the first score is used as the first matching degree; then, a second score corresponding to the number of mismatches is calculated by a difference value of the number of mismatches in the tuning loop with the number of mismatches in the sample response data, and the second score is used as the second matching degree; finally, different weights are assigned to the first matching degree and the second matching degree, respectively, to obtain a comprehensive matching degree.

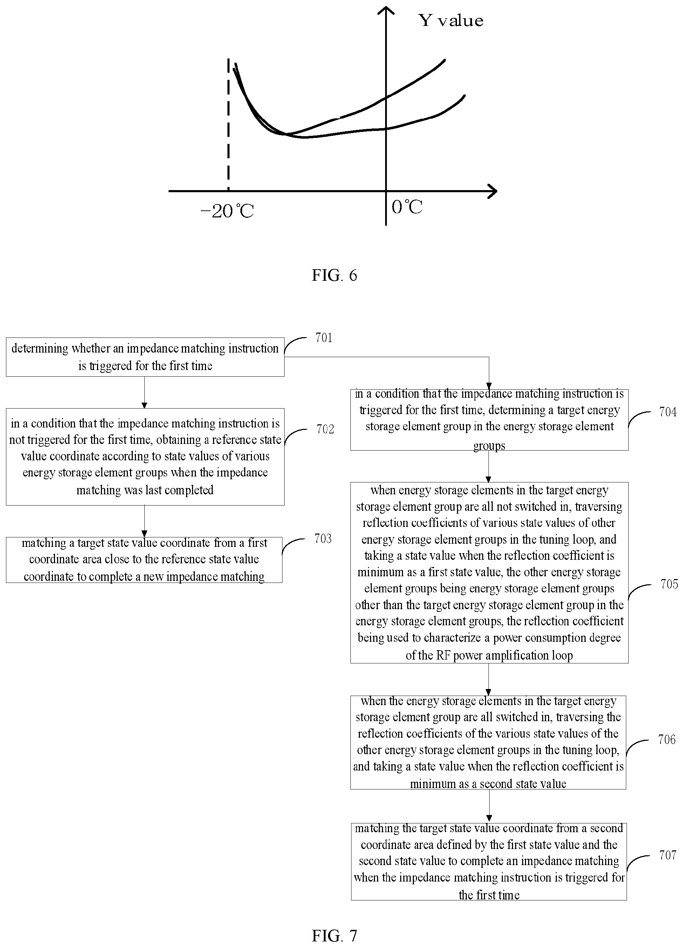

During the entire thawing process, the access status of the energy storage element group connected in series with the load and the access status of the energy storage element group connected in parallel with the load have different change trends. The former has stronger randomness and uncertainty than the latter in early stage and late stage of thawing. FIG. 6 shows a schematic diagram of a change trend of an access status of an energy storage element group in FIG. 5. The access status (i.e., the Y value) of the energy storage element group connected in parallel with the load usually decreases first and then increases or remains unchanged. Different food materials exhibit relatively large differences in regularity, because the water contents of different food materials varies. When food materials absorb a same energy, amounts of water in the free water that is melted from ice into water are different, and thus different food materials require different Y values to match and compensate therefor. Differences among different food materials result in different curves of Y value changing with temperature. According to this feature, when the response data comprises the access status of the energy storage element group in the tuning loop after the preset thawing time is activated, the access status of the energy storage element group can be divided into an access status of series energy storage element group and an access status of parallel energy storage element group, and the access status of parallel energy storage element group can be assigned a higher score when the first score corresponding to the access status is calculated.

In an embodiment of the invention, the radio frequency thawing device is controlled to thaw the food material according to a preset RF power and a preset thawing time, to determine a response data of the tuning loop for impedance matching within the preset thawing time; and a food material information is determined according to the response data and pre-constructed multiple groups of sample data, to be capable of improving a precision of food material identification.

FIG. 7 shows a flow chart of impedance matching of the tuning loop in FIG. 1. In the tuning loop, there are many methods for tuning and matching, such as traversal method, optimization algorithm and so on. In order to improve a matching efficiency, shorten a matching time and reduce a risk of a matching process, a fast matching method can be adopted. The matching process can be decomposed into an initial matching and a process matching.

As shown in FIG. 7, the process matching may comprise: step 701, determining whether an impedance matching instruction is triggered for the first time; step 702, in a condition that the impedance matching instruction is not triggered for the first time, obtaining a reference state value coordinate according to state values of various energy storage element groups when the impedance matching was last completed; and step 703, matching a target state value coordinate from a first coordinate area close to the reference state value coordinate to complete a new impedance matching.

Each energy storage element group has a plurality of state values. The state value is used to characterize access statuses of various energy storage elements in the energy storage element group.

It should be understood that because states of food material will not change suddenly in a short period of time, there will not be a big difference of two consecutive optimal matching points (the state values of various energy storage element groups when the impedance matching is completed), a previous optimal matching point can be used to delineate a scanning area. According to changing characteristics of the optimal matching point during the thawing process, in a condition that the reference state value is located at a bottom of a scanning coordinate system (the scanning coordinate system takes a line formed by various state values of the energy storage element group connected in series with the load as a horizontal axis X, and takes a line formed by various state values of the energy storage element group connected in parallel with the load as a longitudinal axis Y), the first coordinate area close to the reference state value coordinate is delineated horizontally, otherwise the first coordinate area is delineated vertically. Then all combinations of the X (the state values of the energy storage element group connected in series with the load) and Y (the state values of the energy storage element group connected in parallel with the load) in the first coordinate area are scanned. A combination when the reflection coefficient is minimum, is determined as a target state value coordinate, that is, the new optimal matching point.

The initial matching may comprise: step 704, in a condition that the impedance matching instruction is triggered for the first time, determining a target energy storage element group in the energy storage element groups; step 705, when energy storage elements in the target energy storage element group are all not switched in, traversing reflection coefficients of various state values of other energy storage element groups in the tuning loop, and taking a state value when the reflection coefficient is minimum as a first state value, the other energy storage element groups being energy storage element groups other than the target energy storage element group in the energy storage element groups, the reflection coefficient being used to characterize a power consumption degree of the RF power amplification loop; step 706, when the energy storage elements in the target energy storage element group are all switched in, traversing the reflection coefficients of the various state values of the other energy storage element groups in the tuning loop, and taking a state value when the reflection coefficient is minimum as a second state value; and step 707, matching the target state value coordinate from a second coordinate area defined by the first state value and the second state value to complete an impedance matching when the impedance matching instruction is triggered for the first time.

It should be understood that since an initial optimal matching value has a strong randomness, it is required to vertically search for the reflection coefficients corresponding to various state values (for example, Y=0~31) of other energy storage element groups when the energy storage elements in the target energy storage element group are all not switched in (for example, X=0), and record the state value Y1 corresponding to the minimum reflection coefficient. In order to simplify a search process, in actual implementation, a binary search method or other optimization algorithm may be used to quickly find the minimum reflection coefficient. According to a same way, when all the energy storage elements in the target energy storage element group are switched in (for example, X=7), a longitudinal scan is performed, and a corresponding state value Y2 when the reflection coefficient is minimum, is recorded. The second coordinate area can be delineated according to Y1 and Y2, and the target state value coordinate can be matched in the second coordinate area.

Optionally, all combinations of X and Y in the second coordinate area may be added to an array, and the reflection coefficients corresponding to all combinations in the array may be scanned. A combination when the reflection coefficient is minimum, may be determined as the target state value coordinate, i.e., an initial optimal matching point.

In an embodiment of the invention, the above schemes of process matching and initial matching are adopted during the impedance matching of the tuning loop, to be capable of quickly determining the target state value coordinate for impedance matching, shortening the matching time, and in turn extending a service life of the radio frequency thawing device.

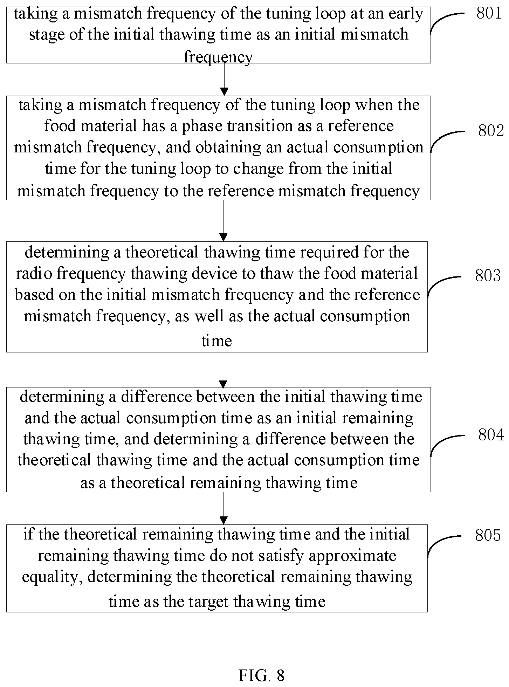

FIG. 8 shows a detailed flow chart of step 203 in FIG. 2. As shown in FIG. 8, adjusting the initial thawing time according to a mismatch frequency of the tuning loop to obtain a target thawing time may comprise : step 801, taking a mismatch frequency of the tuning loop at an early stage of the initial thawing time as an initial mismatch frequency; step 802, taking a mismatch frequency of the tuning loop when the food material has a phase transition as a reference mismatch frequency, and obtaining an actual consumption time for the tuning loop to change from the initial mismatch frequency to the reference mismatch frequency; step 803, determining a theoretical thawing time required for the radio frequency thawing device to thaw the food material based on the initial mismatch frequency and the reference mismatch frequency, as well as the actual consumption time; step 804, determining a difference between the initial thawing time and the actual consumption time as an initial remaining thawing time, and determining a difference between the theoretical thawing time and the actual consumption time as a theoretical remaining thawing time; and step 805, if the theoretical remaining thawing time and the initial remaining thawing time do not satisfy approximate equality, determining the theoretical remaining thawing time as the target thawing time.

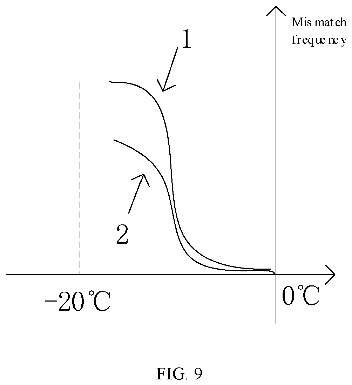

It should be understood that during an initial stage of thawing, most of the free water in the food material exists in the form of ice, and the specific heat capacity of ice is small, and thus when an absorbed energy is constant, a temperature rise of the food material is higher than that in a later stage. Therefore, a form of free water inside the food material changes more greatly, and a capacitor for tuning and matching will be detuned more faster. FIG. 9 shows a variation curve diagram of a mismatch frequency in FIG. 8. In FIG. 9, the curve 1 and curve 2 are mismatch frequency curves of two typical food materials. Food materials with smaller or larger mass, as well as food materials with smaller content or larger water content, may experience larger differences in RF frequency near an end of thawing.

Optionally, the mismatch frequency of the tuning loop at the early stage of the initial thawing time may be taken as the initial mismatch frequency, denoted as F1. The mismatch frequency after the food material enters a phase transition state is taken as the reference mismatch frequency and is denoted as F2. The actual consumption time from the initial mismatch frequency F1 to the reference mismatch frequency F2 is recorded as t1, from which the theoretical thawing time t2 required for thawing the food material can be estimated. A difference t0-t1 between the initial thawing time t0 and the actual consumption time t1 is determined as the initial remaining thawing time. The difference t2-t1 between the theoretical thawing time t2 and the actual consumption time t1 is determined as the theoretical remaining thawing time. If the theoretical remaining thawing time is close to the initial remaining thawing time, a thawing is continued according to the initial remaining thawing time t0-t1, otherwise a remaining time is corrected as the theoretical remaining thawing time t2-t1.

In an embodiment of the invention, the thawing time of food material is re-determined by utilizing the mismatch frequency of the tuning loop during the thawing process of food material. It is equivalent to making a certain correction to the initial thawing time, and thus a precision of the radio frequency thawing device in thawing the food material can be improved to a certain extent.

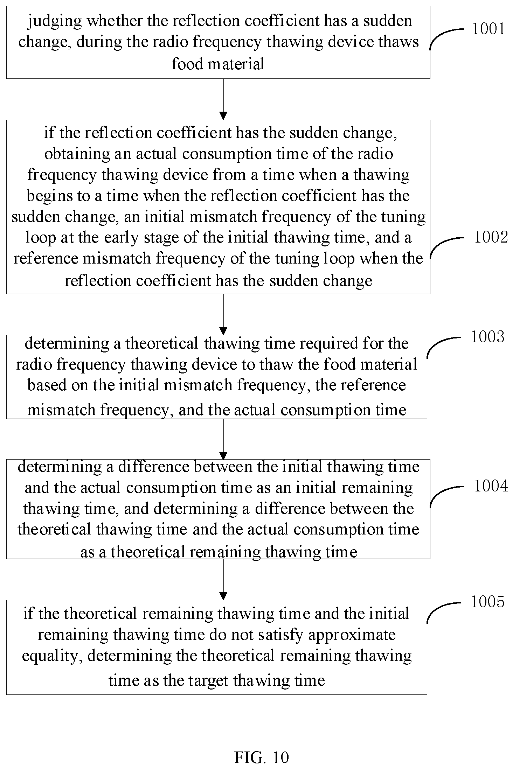

FIG. 10 shows another detailed flow chart of step 203 in FIG. 2. As shown in FIG. 10, adjusting the initial thawing time according to the reflection coefficient of the tuning loop to obtain the target thawing time may comprise: step 1001, judging whether the reflection coefficient has a sudden change, while the radio frequency thawing device thaws food material; step 1002, if the reflection coefficient has the sudden change, obtaining an actual consumption time of the radio frequency thawing device from a time when a thawing begins to a time when the reflection coefficient has the sudden change, an initial mismatch frequency of the tuning loop at the early stage of the initial thawing time, and a reference mismatch frequency of the tuning loop upon the reflection coefficient has the sudden change;
step 1003, determining a theoretical thawing time required for the radio frequency thawing device to thaw the food material based on the initial mismatch frequency, the reference mismatch frequency, and the actual consumption time; step 1004, determining a difference between the initial thawing time and the actual consumption time as an initial remaining thawing time, and determining a difference between the theoretical thawing time and the actual consumption time as a theoretical remaining thawing time; and step 1005, if the theoretical remaining thawing time and the initial remaining thawing time do not satisfy approximate equality, determining the theoretical remaining thawing time as the target thawing time.

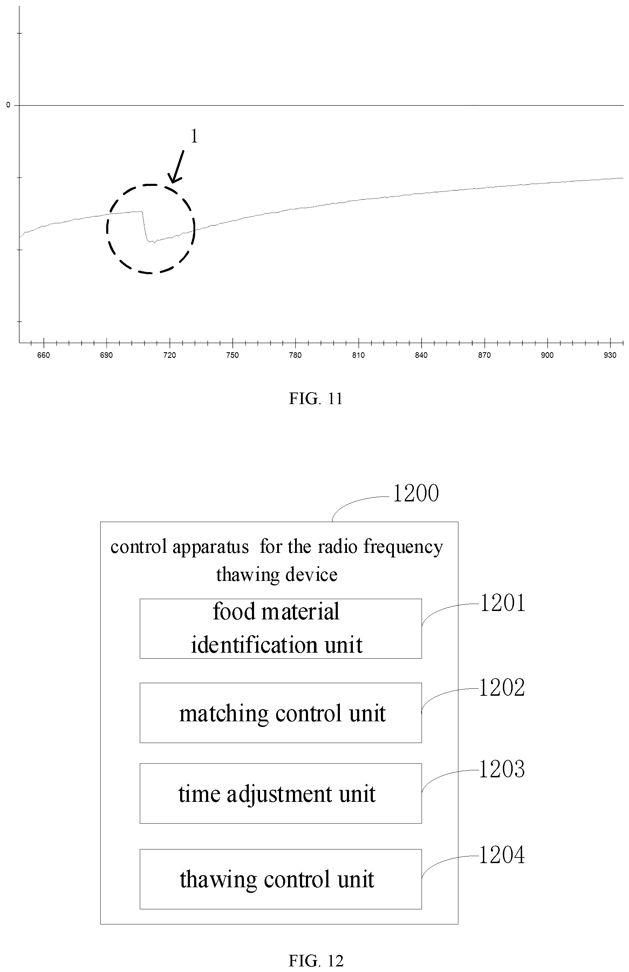

It should be understood that, in a process of thawing food material with a large water content (especially food material mixed with a large amount of ice cubes therein), ice cubes will be melted into water, and the water may flow freely in the thawing chamber. A flowing water will cause an impedance of the thawing chamber to be changed. Therefore, even in a late stage of thawing, the reflection coefficient may not exhibit a stable region of variation, and may even exhibit frequent variations. FIG. 11 shows a schematic diagram of a change trend of a reflection coefficient in FIG. 10. As shown in FIG. 11, the state of food material during thawing is a slowchanging process, and thus the reflection coefficient usually changes evenly and slowly without phenomenon of sudden change. A region indicated by 1 in FIG. 11 represents that when the ice is melted into water and the water flows to a new stable position, the reflection coefficient will suddenly change to a new value and continue to change slowly and evenly. The control device can continuously detect the reflection coefficient and record a historical data of the reflection coefficient. When a sudden change in the reflection coefficient is detected, it is indicated that a large amount of water has undergone a phase transition. Therefore, a time point when the sudden change in the reflection coefficient occurs can be used to correct the thawing time.

Optionally, if the reflection coefficient has a sudden change, the actual consumption time t1 of the radio frequency thawing device from a time when a thawing begins to a time when the reflection coefficient has the sudden change, the initial mismatch frequency F1 of the tuning loop at the early stage of the initial thawing time, and the reference mismatch frequency F2 of the tuning loop upon the reflection coefficient has the sudden change can be obtained. Based on the initial mismatch frequency F1, the reference mismatch frequency F2, and the actual consumption time t1, the theoretical thawing time t2 required for the radio frequency thawing device to thaw the food material can be determined. A difference t0-t1 between the initial thawing time t0 and the actual consumption time t1 is determined as the initial remaining thawing time. The difference t2-t1 between the theoretical thawing time t2 and the actual consumption time t1 is determined as the theoretical remaining thawing time. If the theoretical remaining thawing time is close to the initial remaining thawing time, a thawing is continued according to the initial remaining thawing time t0-t1, otherwise a remaining time is corrected to be the theoretical remaining thawing time t2-t1.

In an embodiment of the invention, the thawing time of food material is re-determined by utilizing the reflection coefficient of the tuning loop during the thawing process of food material. It is equivalent to making a certain correction to the initial thawing time, and thus a precision of the radio frequency thawing device in thawing the food material can be improved to a certain extent.

It should be noted that some unexpected situations may occur during the thawing process of food material, such as the thawing chamber being suddenly opened, a circuit portion of a thawing system being accidentally damaged, or a thawing of already thawed food material. Therefore, an exception handling logic can be designed in the radio frequency thawing device to deal with emergencies.

Optionally, the radio frequency thawing device may comprise a thawing chamber, and the control method may further comprise: obtaining a drawer state of the thawing chamber during the radio frequency thawing device thaws food material; and setting a target RF power as zero in a condition that the drawer state is open.

Optionally, a micro switch may be disposed in a drawer of the thawing chamber, and the drawer state is determined by detecting a state of the micro switch. When the state of the micro switch is on, the drawer state is open; when the state of the micro switch is off, the drawer state is closed.

In an embodiment of the invention, a safety of the radio frequency thawing device is improved by stopping outputting a power when it is detected that the drawer of the thawing chamber is opened in the thawing process.

Optionally, the control method may further comprises: while the radio frequency thawing device thaws food material, judging whether the radio frequency thawing device performs a repeated thawing according to whether the reflection coefficient has a sudden change at an early stage of the initial thawing time.

It should be understood that the reflection coefficient may usually have a phenomenon of sudden change only near an end of thawing. For repeatedly thawed food material, the reflection coefficient may have the phenomenon of sudden change at the early stage of thawing. Therefore, if the reflection coefficient at the early stage of the initial thawing time has the sudden change, it can be determined that the radio frequency thawing device performs a repeated thawing.

In an embodiment of the invention, it is determined whether the radio frequency thawing device performs a repeated thawing by detecting whether the reflection coefficient has the sudden change at the early stage of the initial thawing time, and thus an abnormal food material due to excessive temperature can be avoided.

Optionally, a voltage, current, fan, temperature and other status information of system can also be monitored in real time in the thawing process. When any of these status information is abnormal, the output of power is stopped and an audible and visual alarm is issued to improve the safety of the radio frequency thawing device.

FIG. 12 shows a block diagram of a control apparatus for a radio frequency thawing device according to some embodiments of the invention.

As shown in FIG. 12, the control apparatus 1200 for the radio frequency thawing device according to the embodiment of the invention can be disposed in the radio frequency thawing device as described above. The control apparatus 1200 for the radio frequency thawing device may comprise: a food material identification unit 1201, configured for identifying a food material in the radio frequency thawing device to obtain a food material information; a matching control unit 1202, configured for determining a target RF power and an initial thawing time of the radio frequency thawing device according to the food material information; a time adjustment unit 1203, configured for adjusting the initial thawing time according to a mismatch frequency or reflection coefficient of a tuning loop to obtain a target thawing time, the mismatch frequency being used to characterize a frequency degree of the tuning loop that is triggered for an impedance matching, the reflection coefficient being used to characterize a power consumption degree of an RF power amplification loop; and a thawing control unit 1204, configured for thawing the food material according to a target RF power and a target thawing time.

Optionally, the food material identification unit 1201 may also be configured for controlling the radio frequency thawing device to thaw the food material according to a preset RF power and a preset thawing time, to determine a response data of the tuning loop for impedance matching within the preset thawing time; and, determining the food material information according to the response data and pre-constructed multiple groups of sample data.

Optionally, the preset RF power is greater than the target RF power.

Optionally, the sample data comprises sample response data and sample characteristic parameters in one to one correspondence with the sample response data. The food material identification unit 1201 may also be configured for: determining response data of the tuning loop for impedance matching within a plurality of the preset thawing times to obtain multiple groups of response data; for each group of target response data, determining a matching degree of the target response data with various groups of sample response data, the matching degree being used to characterize a proximity degree of the target response data with the various groups of sample response data, the target response data being any group from the multiple groups of response data; calculating a comprehensive matching degree between the multiple groups of response data and a same sample response data, based on a matching degree of the multiple groups of response data with the same sample response data; and determining the sample characteristic parameter corresponding to the sample response data with a highest comprehensive matching degree as the food material information.

Optionally, the food material identification unit 1201 may also be configured for weightedly calculating the matching degrees of the multiple groups of response data in correspondence with a same sample response data to obtain a comprehensive matching degree between the multiple groups of response data and the same sample response data.

Optionally, energy storage element groups are connected in series and in parallel in the tuning loop. Each energy storage element group has a plurality of state values. The state value is used to characterize access statuses of various energy storage elements in the energy storage element group. The control apparatus also comprises an impedance matching unit (not shown in the accompanying drawings), which is configured for: determining whether an impedance matching instruction is triggered for the first time; in a condition that the impedance matching instruction is not triggered for the first time, obtaining a reference state value coordinate according to state values of various energy storage element groups when the impedance matching was last completed; and matching a target state value coordinate from a first coordinate area close to the reference state value coordinate to complete a new impedance matching.

Optionally, the impedance matching unit may also be configured for: in a condition that the impedance matching instruction is triggered for the first time, determining a target energy storage element group in the energy storage element groups; when energy storage elements in the target energy storage element group are all not switched in, traversing reflection coefficients of various state values of other energy storage element groups in the tuning loop, and taking a state value when the reflection coefficient is minimum as a first state value, the other energy storage element groups being energy storage element groups other than the target energy storage element group in the energy storage element groups; when the energy storage elements in the target energy storage element group are all switched in, traversing the reflection coefficients of the various state values of the other energy storage element groups in the tuning loop, and taking a state value when the reflection coefficient is minimum as a second state value; and matching the target state value coordinate from a second coordinate area defined by the first state value and the second state value to complete an impedance matching when the impedance matching instruction is triggered for the first time.

Optionally, the time adjustment unit 1203 may also be configured for: taking a mismatch frequency of the tuning loop at an early stage of the initial thawing time as an initial mismatch frequency; taking a mismatch frequency of the tuning loop when the food material has a phase transition as a reference mismatch frequency, and obtaining an actual consumption time for the tuning loop to change from the initial mismatch frequency to the reference mismatch frequency; determining a theoretical thawing time required for the radio frequency thawing device to thaw the food material based on the initial mismatch frequency and the reference mismatch frequency, as well as the actual consumption time; determining a difference between the initial thawing time and the actual consumption time as an initial remaining thawing time, and determining a difference between the theoretical thawing time and the actual consumption time as a theoretical remaining thawing time; and if the theoretical remaining thawing time and the initial remaining thawing time do not satisfy approximate equality, determining the theoretical remaining thawing time as the target thawing time.

Optionally, the time adjustment unit 1203 may also be configured for: while the radio frequency thawing device thaws food material, judging whether the reflection coefficient has a sudden change; if the reflection coefficient has the sudden change, obtaining an actual consumption time of the radio frequency thawing device from a time when a thawing begins to a time when the reflection coefficient has the sudden change, an initial mismatch frequency of the tuning loop at the early stage of the initial thawing time, and a reference mismatch frequency of the tuning loop upon the reflection coefficient has the sudden change; determining a theoretical thawing time required for the radio frequency thawing device to thaw the food material based on the initial mismatch frequency, the reference mismatch frequency, and the actual consumption time; determining a difference between the initial thawing time and the actual consumption time as an initial remaining thawing time, and determining a difference between the theoretical thawing time and the actual consumption time as a theoretical remaining thawing time; and if the theoretical remaining thawing time and the initial remaining thawing time do not satisfy approximate equality, determining the theoretical remaining thawing time as the target thawing time.

Optionally, the radio frequency thawing device may comprise a thawing chamber. The matching control unit 1202 may also be configured for: obtaining a drawer state of the thawing chamber while the radio frequency thawing device thaws food material; and setting a target RF power as zero in a condition that the drawer state is open.

Optionally, the control apparatus also comprises a repeated thawing judgment unit (not shown in the accompanying drawings), which may be configured for while the radio frequency thawing device thaws food material, judging whether the radio frequency thawing device repeats the thawing according to whether the reflection coefficient has a sudden change at an early stage of the initial thawing time.

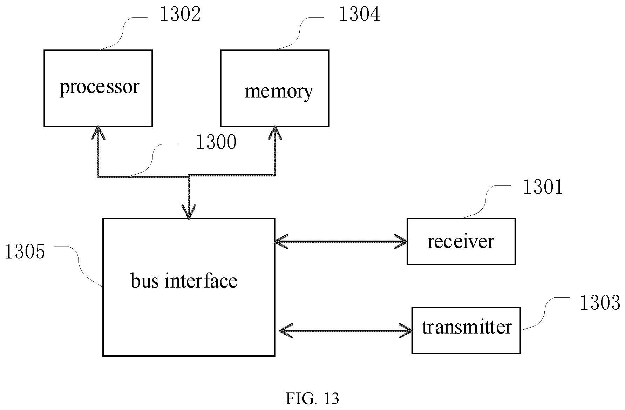

FIG. 13 shows an internal structural diagram of the control device for the radio frequency thawing device according to some embodiments of the invention. As shown in FIG. 13, the control device for the radio frequency thawing device comprises one or more memories 1304, one or more processors 1302, and at least one computer program (program code) stored in the memory 1304 and executable on the processor 1302. When the processor 1302 executes the computer program, the control method for the radio frequency thawing device as described above is implemented.

In FIG. 13, a bus architecture is represented by bus 1300, which may comprise any number of interconnected buses and bridges. The bus 1300 links various circuits comprising one or more processors represented by processor 1302 and one or more memories represented by memory 1304 together. The bus 1300 may also link various other circuits together such as peripheral devices, voltage regulators, and power management circuits, which are all well known in the art and, therefore, will not be described further herein. A bus interface 1305 provides an interface among the bus 1300, a receiver 1301 and a transmitter 1303. The receiver 1301 and the transmitter 1303 may be the same element, i.e., a transceiver, providing a unit for communicating with various other apparatuses over a transmission medium. The processor 1302 is responsible for managing the bus 1000 and general processings, while the memory 1304 may be configured to store data used by the processor 1302 when performing operations.

In the invention, a computer-readable storage medium is also proposed, on which a computer program is stored. The computer program, when executed by a processor, causes the processor to implement the control method for the radio frequency thawing device mentioned above.

In the invention, a computer program product is also proposed, which comprises a computer program. The computer program, when executed by a processor, causes the processor to implement the control method for the radio frequency thawing device mentioned above.

The functions described herein may be implemented in hardware, software executed by a processor, firmware, or any combination thereof. If the functions described herein are implemented in software executed by a processor, the functions may be stored on a computer-readable medium or transmitted via the computer-readable medium as one or more instructions or code. Other examples and implementations are within the scope and spirit of the invention and appended claims. For example, due to the nature of software, the functions described above may be implemented by using software executed by a processor, hardware, firmware, hardwiring, or a combination of any of these. In addition, various functional units may be integrated into one processing unit, or various units may exist physically separately, or two or more units may be integrated into one unit.

In the several embodiments provided in the invention, it should be understood that the disclosed technical contents can be implemented in other ways. The embodiments for the apparatus described above are only schematic. For example, the division of units can be a logical function division. There may be other division methods in actual implementation. For example, multiple units or components can be combined or integrated into another system, or some features can be ignored or not executed. Another point is that a mutual coupling or direct coupling or communication connection shown or discussed may be an indirect coupling or communication connection through some interfaces, units or modules, which may be electrical or other forms.

The unit described as a separate component may or may not be physically separated, and the component of the control apparatus may or may not be a physical unit, that is, may be located in one place or distributed onto multiple units. Some or all of the units may be selected according to actual needs to achieve the purpose of the solution of this embodiment.

The integrated unit, if implemented in the form of a software functional unit and sold or used as an independent product, can be stored in a computer-readable storage medium. Based on such understanding, the technical solution of the invention may essentially, or a portion of the technical solution of the invention that contributes to the prior art, or all or a portion of the technical solution may be embodied in the form of a software product. The computer software product is stored in a storage medium and comprises a number of instructions for enabling a computer device(which may be a personal computer, a server or a network apparatus, and the like) to execute all or a portion of the steps of the method described in various embodiments of the invention. The aforementioned storage media comprises: U disk, Read-Only Memory (ROM), Random Access Memory (RAM), mobile hard disk, magnetic disk or optical disk and other media that can store program codes.

The above descriptions are merely embodiments of the application and are not intended to limit the application. For those skilled in the art, the application may have various modifications and changes. Any modifications, equivalent substitutions, improvements, and the like. made within the spirit and principles of this application should be comprised within a scope sought by the claims of this application.

## Claims

1. A control method for a radio frequency thawing device, wherein the radio frequency thawing device comprises an RF power amplification loop and a tuning loop, the RF power amplification loop being configured to output an RF power to the tuning loop, the tuning loop being configured for an impedance matching, and wherein the control method comprises:
identifying a food material in the radio frequency thawing device to obtain food material information;
determining a target RF power and an initial thawing time of the radio frequency thawing device according to the food material information;
adjusting the initial thawing time according to a mismatch frequency or reflection coefficient of the tuning loop to obtain a target thawing time, the mismatch frequency being used to characterize a frequency degree at which the tuning loop is triggered for the impedance matching, the reflection coefficient being used to characterize a power consumption degree of the RF power amplification loop; and
thawing the food material according to the target RF power and the target thawing time.

2. The control method according to claim 1, wherein the identifying the food material in the radio frequency thawing device to obtain the food material information, comprises:
controlling the radio frequency thawing device to thaw the food material according to a preset RF power and a preset thawing time, to determine a response data of the tuning loop for the impedance matching within the preset thawing time; and
determining the food material information according to the response data and pre-constructed multiple groups of sample data.

3. The control method according to claim 2, wherein the preset RF power is greater than the target RF power.

4. The control method according to claim 2 or 3, wherein the sample data comprises sample response data and sample characteristic parameters in a one to one correspondence with the sample response data, the sample characteristic parameters being used to characterize an attribute status of the food material, and wherein the determining the food material information according to the response data and the pre-constructed multiple groups of sample data, comprises:
Determining the response data of the tuning loop for the impedance matching within a plurality of the preset thawing times to obtain multiple groups of response data;
for each group of target response data, determining a matching degree between the target response data and various groups of sample response data, the matching degree being used to characterize a proximity degree between the target response data and the various groups of sample response data, the target response data being any group from the multiple groups of response data;
calculating a comprehensive matching degree between the multiple groups of response data and a same sample response data, based on matching degrees between the multiple groups of response data and the same sample response data; and
determining the sample characteristic parameter corresponding to the sample response data with a highest comprehensive matching degree as the food material information.

5. The control method according to claim 4, wherein the calculating the comprehensive matching degree between the multiple groups of response data and the same sample response data, based on matching degrees of the multiple groups of response data with the same sample response data, comprises:
weightedly calculating the matching degrees of the multiple groups of response data in correspondence with the same sample response data to obtain the comprehensive matching degree between the multiple groups of response data and the same sample response data.

6. The control method according to any one of claims 1 to 5, wherein energy storage element groups are connected in series and in parallel in the tuning loop, wherein each energy storage element group has a plurality of state values, the state values being used to characterize access statuses of various energy storage elements in the energy storage element group, and wherein the control method further comprises:
determining whether the impedance matching instruction is triggered for a first time;
obtaining a reference state value coordinate according to state values of various energy storage element groups when a previous impedance matching was completed, in a condition that the impedance matching instruction is not triggered for the first time; and
matching a target state value coordinate from a first coordinate area close to the reference state value coordinate to complete a new impedance matching.

7. The control method according to claim 6, wherein after the determining whether the impedance matching instruction is triggered for the first time, the control method further comprises:
determining a target energy storage element group in the energy storage element groups, in a condition that the impedance matching instruction is triggered for the first time;
traversing, when energy storage elements in the target energy storage element group are all not switched in, reflection coefficients of various state values of other energy storage element groups in the tuning loop, and taking a state value as a first state value when the reflection coefficient is minimum, the other energy storage element groups being energy storage element groups other than the target energy storage element group in the energy storage element groups;
traversing, when the energy storage elements in the target energy storage element group are all switched in, the reflection coefficients of the various state values of the other energy storage element groups in the tuning loop, and taking a state value as a second state value when the reflection coefficient is minimum; and
matching the target state value coordinate from a second coordinate area defined by the first state value and the second state value to complete the impedance matching when the impedance matching instruction is triggered for the first time.

8. The control method according to any one of claims 1 to 7, wherein the adjusting the initial thawing time according to the mismatch frequency of the tuning loop to obtain the target thawing time, comprises:
taking a mismatch frequency of the tuning loop at an early stage of the initial thawing time as an initial mismatch frequency;
taking a mismatch frequency of the tuning loop when the food material has a phase transition as a reference mismatch frequency, and obtaining an actual consumption time for the tuning loop to change from the initial mismatch frequency to the reference mismatch frequency;
determining a theoretical thawing time required for the radio frequency thawing device to thaw the food material based on the initial mismatch frequency and the reference mismatch frequency, as well as the actual consumption time;
determining a difference between the initial thawing time and the actual consumption time as an initial remaining thawing time, and determining a difference between the theoretical thawing time and the actual consumption time as a theoretical remaining thawing time; and
determining, if the theoretical remaining thawing time and the initial remaining thawing time do not satisfy approximate equality, the theoretical remaining thawing time as the target thawing time.

9. The control method according to any one of claims 1 to 7, wherein the adjusting the initial thawing time according to the reflection coefficient of the tuning loop to obtain the target thawing time, comprises:
judging, while the radio frequency thawing device thaws the food material, whether the reflection coefficient has a sudden change;
obtaining, if the reflection coefficient has the sudden change, an actual consumption time of the radio frequency thawing device from a time when a thawing begins to a time when the reflection coefficient has the sudden change, an initial mismatch frequency of the tuning loop at an early stage of the initial thawing time, and a reference mismatch frequency of the tuning loop upon the reflection coefficient has the sudden change;
determining a theoretical thawing time required for the radio frequency thawing device to thaw the food material based on the initial mismatch frequency, the reference mismatch frequency, and the actual consumption time;
determining a difference between the initial thawing time and the actual consumption time as an initial remaining thawing time, and determining a difference between the theoretical thawing time and the actual consumption time as a theoretical remaining thawing time; and
determining, if the theoretical remaining thawing time and the initial remaining thawing time do not satisfy approximate equality, the theoretical remaining thawing time as the target thawing time.

10. The control method according to any one of claims 1 to 9, wherein the radio frequency thawing device comprises a thawing chamber, and wherein the control method further comprises:
obtaining a drawer state of the thawing chamber while the radio frequency thawing device thaws the food material; and
setting the target RF power as zero in a condition that the drawer state is open.

11. The control method according to any one of claims 1 to 10, further comprising:
judging, while the radio frequency thawing device thaws the food material, whether the radio frequency thawing device performs a repeated thawing according to whether the reflection coefficient has the sudden change at the early stage of the initial thawing time.

12. A control apparatus for a radio frequency thawing device, wherein the radio frequency thawing device comprises an RF power amplification loop and a tuning loop, the RF power amplification loop being configured to output an RF power to the tuning loop, the tuning loop being configured for an impedance matching, and wherein the control apparatus comprises:
a food material identification unit, configured for identifying a food material in the radio frequency thawing device to obtain food material information;
a matching control unit, configured for determining a target RF power and an initial thawing time of the radio frequency thawing device according to the food material information;
a time adjustment unit, configured for adjusting the initial thawing time according to a mismatch frequency or reflection coefficient of the tuning loop to obtain a target thawing time, the mismatch frequency being used to characterize a frequency degree of the tuning loop that is triggered for the impedance matching, the reflection coefficient being used to characterize a power consumption degree of the RF power amplification loop; and
a thawing control unit, configured for thawing the food material according to the target RF power and the target thawing time.

13. The control apparatus according to claim 12, wherein the food material identification unit is also configured for controlling the radio frequency thawing device to thaw the food material according to a preset RF power and a preset thawing time, to determine a response data of the tuning loop for the impedance matching within the preset thawing time; and determining the food material information according to the response data and pre-constructed multiple groups of sample data.

14. The control apparatus according to claim 13, wherein the preset RF power is greater than the target RF power.

15. The control apparatus according to claim 13 or 14, wherein the sample data comprises sample response data and sample characteristic parameters in a one to one correspondence with the sample response data, and wherein the food material identification unit is also configured for:
determining the response data of the tuning loop for the impedance matching within a plurality of the preset thawing times to obtain multiple groups of response data;
for each group of target response data, determining a matching degree of the target response data with various groups of sample response data, the matching degree being used to characterize a proximity degree of the target response data with the various groups of sample response data, the target response data being any group from the multiple groups of response data;
calculating a comprehensive matching degree between the multiple groups of response data and a same sample response data, based on matching degrees of the multiple groups of response data with the same sample response data; and
determining the sample characteristic parameter corresponding to the sample response data with a highest comprehensive matching degree as the food material information.

16. The control apparatus according to claim 15, wherein the food material identification unit is further configured for weightedly calculating the matching degrees of the multiple groups of response data in correspondence with the same sample response data to obtain the comprehensive matching degree between the multiple groups of response data and the same sample response data.

17. The control apparatus according to any one of claims 12 to 16, wherein energy storage element groups are connected in series and in parallel in the tuning loop, wherein each energy storage element group has a plurality of state values, the state values being used to characterize access statuses of various energy storage elements in the energy storage element group, and wherein the control apparatus further comprises an impedance matching unit, which is configured for: determining whether an impedance matching instruction is triggered for a first time; obtaining a reference state value coordinate according to state values of various energy storage element groups when a previous impedance matching was completed, in a condition that the impedance matching instruction is not triggered for the first time; and matching a target state value coordinate from a first coordinate area close to the reference state value coordinate to complete a new impedance matching.

18. The control apparatus according to claim 17, wherein the impedance matching unit is further configured for:
determining a target energy storage element group in the energy storage element groups, in a condition that the impedance matching instruction is triggered for the first time;
traversing, when energy storage elements in the target energy storage element group are all not switched in, reflection coefficients of various state values of other energy storage element groups in the tuning loop, and taking a state value as a first state value when the reflection coefficient is minimum, the other energy storage element groups being energy storage element groups other than the target energy storage element group in the energy storage element groups;
traversing, when the energy storage elements in the target energy storage element group are all switched in, the reflection coefficients of the various state values of the other energy storage element groups in the tuning loop, and taking a state value as a second state value when the reflection coefficient is minimum; and
matching the target state value coordinate from a second coordinate area defined by the first state value and the second state value to complete the impedance matching when the impedance matching instruction is triggered for the first time.

19. The control apparatus according to any one of claims 12 to 18, wherein the time adjustment unit is further configured for:
taking a mismatch frequency of the tuning loop at an early stage of the initial thawing time as an initial mismatch frequency;
taking a mismatch frequency of the tuning loop when the food material has a phase transition as a reference mismatch frequency, and obtaining an actual consumption time for the tuning loop to change from the initial mismatch frequency to the reference mismatch frequency;
determining a theoretical thawing time required for the radio frequency thawing device to thaw the food material based on the initial mismatch frequency and the reference mismatch frequency, as well as the actual consumption time;
determining a difference between the initial thawing time and the actual consumption time as an initial remaining thawing time, and determining a difference between the theoretical thawing time and the actual consumption time as a theoretical remaining thawing time; and
determining, if the theoretical remaining thawing time and the initial remaining thawing time do not satisfy approximate equality, the theoretical remaining thawing time as the target thawing time.

20. The control apparatus according to any one of claims 12 to 18, wherein the time adjustment unit is further configured for:
judging, while the radio frequency thawing device thaws the food material, whether the reflection coefficient has a sudden change;
obtaining, if the reflection coefficient has the sudden change, an actual consumption time of the radio frequency thawing device from a time when a thawing begins to a time when the reflection coefficient has the sudden change, an initial mismatch frequency of the tuning loop at an early stage of the initial thawing time, and a reference mismatch frequency of the tuning loop upon the reflection coefficient has the sudden change;
determining a theoretical thawing time required for the radio frequency thawing device to thaw the food material based on the initial mismatch frequency, the reference mismatch frequency, and the actual consumption time;
determining a difference between the initial thawing time and the actual consumption time as an initial remaining thawing time, and determining a difference between the theoretical thawing time and the actual consumption time as a theoretical remaining thawing time; and
determining, if the theoretical remaining thawing time and the initial remaining thawing time do not satisfy approximate equality, the theoretical remaining thawing time as the target thawing time.

21. The control apparatus according to any one of claims 12 to 20, wherein the radio frequency thawing device comprises a thawing chamber, and wherein the matching control unit is further configured for:
obtaining a drawer state of the thawing chamber while the radio frequency thawing device thaws the food material; and
setting the target RF power as zero in a condition that the drawer state is open.

22. The control apparatus according to any one of claims 12 to 21, further comprising a repeated thawing judgment unit, which is configured for judging, while the radio frequency thawing device thaws the food material, whether the radio frequency thawing device repeats the thawing according to whether the reflection coefficient has the sudden change at the early stage of the initial thawing time.

23. A control device for a radio frequency thawing device, comprising a memory stored with a computer program, and a processor which, when executing the computer program, implements steps of a method according to any one of claims 1 to 11.

24. A computer-readable storage medium, comprising a computer program stored thereon, wherein the computer program, when executed by a processor, causes the processor to implement steps of a method according to any one of claims 1 to 11.

25. A computer program product, comprising a computer program, wherein the computer program, when executed by a processor, causes the processor to implement steps of a method according to any one of claims 1 to 11.
